# EUROPÄISCHE PATENTSCHRIFT

(11) **EP 2 364 069 B1**
(45) Veröffentlichungstag und Bekanntmachung des Hinweises auf die Patenterteilung: **06.06.2012**
(21) Anmeldenummer: 11405215.2
(22) Anmeldetag: 22.02.2011
(51) Int. Cl.: H05B 37/02

(54) **Verfahren zur Steuerung eines Präsenzmelders, und entsprechender Präsenzmelder**
Method of control of a motion detector, and associated motion detector
Méthode de commande d'un détecteur de présence, et détecteur de présence associé

(30) Priorität: 01.03.2010 CH 2552010
(43) Veröffentlichungstag der Anmeldung: 07.09.2011
(73) Patentinhaber: Theben HTS AG, 8307 Effretikon (CH)
(72) Erfinder: Blumer, Fritz, 8604 Volketswil (CH)
(74) Vertreter: Roshardt, Werner Alfred

(56) Entgegenhaltungen:
- EP-A1- 1 311 142
- DE-B3-102005 015 748
- JP-A- 2001 085 170
- US-A- 6 151 529
- US-A1- 2006 125 624

## Beschreibung

### Technisches Gebiet

Die Erfindung betrifft ein Verfahren zur Steuerung einer elektrischen Anwendung, insbesondere einer Lichtquelle, mit einem Präsenzmelder, umfassend die Schritte
a) Ermittlung von Triggersignalen zur Steuerung eines Laststroms durch Aufbereitung und Umwandlung von im Präsenzmelder detektierten Bewegungssignalen infolge einer Präsenz in einem Erfassungsbereich des Präsenzmelders;
b) Einschalten eines Laststroms in Abhängigkeit von benutzerdefinierten und/oder vorgegebenen Systemparametern und/oder gemessenen Umgebungsparametern aufgrund eines zuerst ermittelten Triggersignals nach einer Abwesenheitsperiode;
c) Setzen eines aktuellen Startwerts eines Zeitgebers für eine Nachlaufzeit mit jedem ermittelten Triggersignal, wobei bei Ausbleiben nachfolgender Triggersignale der Laststrom nach Ablauf der Nachlaufzeit ausgeschaltet wird, sofern er eingeschaltet ist.

### Stand der Technik

Präsenzmelder, welche z. B. nach dem Prinzip der Passiv-Infrarot-Technik arbeiten, sind in zahlreichen Ausführungsformen auf dem Markt. Sie messen und vergleichen die Infrarot-Strahlung in ihrem Erfassungsbereich, senden jedoch selbst keine Strahlen aus, weshalb sie als passiv bezeichnet werden. Ein Präsenzmelder ist eine elektronische Steuereinheit, welche mit seiner Optik/Sensorik die unsichtbare Infrarot-Wärmestrahlung z. B. von Lebewesen, insbesondere Personen, wahrnimmt und bei einer in seinem Erfassungsbereich bewegten Wärmequelle ein Steuersignal für eine Schalteinheit für einen Laststrom erzeugt. Die Schalteinheit kann dabei Teil des Präsenzmelders sein oder als externe Einheit vom Präsenzmelder angesteuert werden. Als Schaltelemente zum Schalten des Laststroms können z. B. Relais oder Triacs zum Einsatz kommen.

Die Sensoren zur Detektierung der Infrarot-Strahlung sind bevorzugt so ausgebildet, dass die IR-Strahlung eines Lebewesens (d. h. eine Veränderung des Wärmestrahlungsfeldes) ermittelt und als Bewegungssignal ausgegeben werden kann. Grundsätzlich kann jedwede Art von Sensoren zur Detektierung von IR-Strahlung zum Einsatz kommen. Für eine Ausführung des Präsenzmelders als passiver IR-Präsenzmelder sind pyroelektrische Sensoren bevorzugt. Die Sensoren können für differenzielle Messungen, z. B. zwei Sensoren oder einen zweigeteilten Sensor umfassen, um beispielsweise Bewegungen einer IR-Quelle detektieren zu können.

Im Bewegungsmelder kann eine zeitliche Verzögerung (Nachlaufzeit) eingestellt werden, welche der Einschaltzeit einer beliebigen Applikation, z. B. einer oder mehrerer elektrischer Lichtquellen, nach der letzten Bewegung entspricht. Die Nachlaufzeit ist erforderlich, damit z. B. bei Unterbrüchen in der Bewegungserfassung (wenn sich die zu erfassende Person nur ab und zu bewegt), das Licht nicht sofort ausgeschaltet wird. Bei jedem aus einem Bewegungssignal aufbereiteten Triggersignal beginnt der volle Zeitablauf für die Nachlaufzeit von vorne. Wenn dauernd Bewegung herrscht, wird die Nachlaufzeit laufend neu getriggert und die Beleuchtung bleibt eingeschaltet. Werden keine Bewegungen mehr erfasst, bleibt der Laststrom noch für die Nachlaufzeit eingeschaltet und wird bei Ablauf der Nachlaufzeit abgeschaltet.

Derartige Präsenzmelder haben den Nachteil, dass das Licht für die gesamte Nachlaufzeit eingeschaltet bleibt, auch wenn die Anwesenheit der Person im überwachten Raumbereich nur von kurzer Dauer ist bzw. war. Nicht zuletzt aus energierelevanten Gründen ist es daher ein Bedürfnis, diese Situation zu verbessern.

Die CH 683 473 A5 (Bodmer) beschreibt einen Bewegungsmelder, bei welchem die Nachlaufzeit zum Abschalten der Beleuchtung automatisch und kontinuierlich an eine Häufigkeit bzw. an eine zeitliches Muster der detektierten Bewegungssignale adaptiert und neu eingestellt wird.

Derartige Bewegungsmelder haben allerdings den Nachteil, dass die Anpassung der Nachlaufzeit sich auf Erfahrungswerte aus einer Triggerhäufigkeit in aufeinanderfolgenden Messperioden stützt. Im Allgemeinen wird die Nachlaufzeit für die nächste Messperiode aus Triggerintervallen der vorherigen Messperiode bestimmt. Zwar ist auch eine Anpassung der Nachlaufzeit zur aktuellen Messperiode vorgesehen. Diese Anpassung erlaubt allerdings nur eine Verlängerung der Nachlaufzeit für den Fall grosser Triggerintervalle. Um zu verhindern, dass das Licht auch in Ausnahmefällen bei einer nur kurzzeitigen Präsenz nicht während der gesamten Nachlaufzeit eingeschaltet bleibt, ist es jedoch erforderlich, einen Präsenzmelder bereitzustellen, welcher unmittelbar auf nur kurzzeitige Anwesenheiten reagieren kann.

Die US 2006/125624 A1 beschreibt ein Verfahren zur Steuerung von Lichtquellen in einem Raum mit einem PIR Präsenzmelder. Zur Energieeinsparung weist das Verfahren eine Nachlaufzeit auf, nach welcher das Licht ausgeschaltet wird, wenn keine Präsenzsignale detektiert werden. Bei einem zuerst ermittelten Präsenzsignal wird eine sehr kurze Nachlaufzeit ausgelöst. Sofern jedoch fortgesetzt Präsenzsignale ermittelt werden, geht das Verfahren in einen Basisbetriebsmodus über, in welchem die Nachlaufzeit zunächst gemäss einem vorgegeben Wert bestimmt ist. In Abhängigkeit der Häufigkeit und der Grösse von Präsenzsignalen wird in der Folge die Nachlaufzeit adaptiv angepasst. Je nach Zeitdauer des zuletzt ermittelten Präsenzsignals wird dieses in eine von zwei Klassen unterteilt und entsprechend die Nachlaufzeit entweder angepasst (bei kleinen Präsenzsignalen) oder beibehalten (bei grossen Präsenzsignalen). Im Falle kleiner Präsenzsignale wird die Nachlaufzeit in Abhängigkeit eines zeitlichen Abstandes der zwei zuletzt ermittelten Präsenzsignale erhöht (Abstand grösser als 75% der aktuellen Nachlaufzeit) oder verkürzt (Abstand kleiner als 25% der aktuellen Nachlaufzeit). Dabei ist eine minimal sowie eine maximal mögliche Nachlaufzeit definiert.

Die EP 1 311 142 A1 beschreibt ein Verfahren zur Steuerung einer Mehrzahl von in einem Raum befindlichen Aktoren mit einem PIR-Sensor, welcher Bewegungssignale im Raum detektiert. Das Verfahren umfasst eine Nachlaufzeit, welche mit jedem detektierten Bewegungssignal ausgelöst wird und während welcher die Aktoren aktiviert bleiben. Nach Ablauf der Nachlaufzeit werden die Aktoren zurückgesetzt bzw. ausgeschaltet. Die Nachlaufzeit (Δt_{N}) wird nach Ablauf einer Überwachungsperiode (τ_{N}) neu festgelegt. Die Überwachungsperiode kann der zuletzt eingestellten Nachlaufzeit entsprechen oder konstant gewählt sein. Die neue Nachlaufzeit wird in Abhängigkeit von der Anzahl der in der letzten Überwachungsperiode festgestellten Bewegungsvorgänge eingestellt, wobei eine kurze Nachlaufzeit eingestellt wird, wenn eine hohe Bewegungsrate festgestellt wird, und eine lange Nachlaufzeit eingestellt wird, wenn die Häufigkeit der festgestellten Bewegungen niedrig ist.

Die US 6,151,529 A1 beschreibt ein System zur Steuerung von Lastströmen für Verbraucher, umfassend einen PIR-Präsenzdetektor, welcher in Abhängigkeit von detektierten Bewegungen Bewegungssignale erzeugt. Das System umfasst eine Steuerung, in welcher eine einstellbare Nachlaufzeit ("motion sensor time out value" - MTV) im Bereich von 1-30 Min. sowie eine Standardnachlaufzeit von 15 Minuten ("default time-out" - default TO) als Parameter benutzt werden. Weiter kann von einem Benutzer eine Nachlaufzeit im Bereich von 0-60 Min. vorgegeben werden (UST). Die Steuerung umfasst einen adaptiven Modus, in welchem die UST aufgrund von vorgegebenen Parametern und Erfahrungswerten automatisch verlängert wird ("adjusted UST"). Insbesondere wird die Nachlaufzeit aufgrund einer statistisch ermittelten mittleren Dauer zwischen zwei detektierten Bewegungssignalen ("ATBM") verlängert, wenn der ATBM-Wert im Bereich von 12.5 % der momentanen Nachlaufzeit MTV liegt und anderenfalls verkürzt, wenn zusätzlich weitere Kriterien erfüllt sind.

### Darstellung der Erfindung

Aufgabe der Erfindung ist es, ein weiteres dem eingangs genannten technischen Gebiet zugehörendes Verfahren zur Steuerung eines Laststroms mit einem Präsenzmelder zu schaffen, welches auf einfache Weise umgesetzt werden kann und auf kurze Anwesenheiten von Personen im Erfassungsbereich reagiert.

Die Lösung der Aufgabe ist durch die Merkmale des Anspruchs 1 definiert. Gemäss der Erfindung umfasst das Verfahren zur Steuerung einer elektrischen Anwendung, insbesondere einer Lichtquelle, mit einem Präsenzmelder, die Schritte
a) Ermittlung von Triggersignalen zur Steuerung eines Laststroms durch Aufbereitung und Umwandlung von im Präsenzmelder detektierten Bewegungssignalen infolge ein Präsenz in einem Erfassungsbereich des Präsenzmelders;
b) Einschalten eines Laststroms in Abhängigkeit von benutzerdefinierten und/oder vorgegebenen Systemparametern und/oder gemessenen Umgebungsparametern aufgrund eines zuerst ermittelten Triggersignals nach einer Abwesenheitsperiode;
c) Setzen eines aktuellen Startwerts eines Zeitgebers für eine Nachlaufzeit mit jedem ermittelten Triggersignal, wobei bei Ausbleiben nachfolgender Triggersignale der Laststrom nach Ablauf der Nachlaufzeit ausgeschaltet wird, sofern er eingeschaltet ist;

Das Verfahren ist gekennzeichnet durch die weiteren Schritte:
d) Ermittlung einer angenommenen Aufenthaltsdauer aufgrund der ermittelten Triggersignale während eines vom zuerst ermittelten Triggersignal ausgelösten Testintervalls bei Ablauf des Testintervalls, wobei das Testintervall kürzer ist als die Dauer der Nachlaufzeit;
e) Vergleichen der ermittelten angenommenen Aufenthaltsdauer mit einer vorgebbaren maximalen Aufenthaltsdauer;
f) Ausschalten des Laststroms bei Ablauf des Testintervalls, sofern er eingeschaltet ist und sofern die angenommene Anwesenheitsdauer kleiner ist als die maximale Anwesenheitsdauer.

Im Folgenden wird das erfindungsgemässe Verfahren ohne Einschränkung der Allgemeinheit anhand eines Verfahrens zur Steuerung eines Beleuchtungsstroms beschrieben. Grundsätzlich können verschiedene Ausführungsformen des Verfahrens jedoch auch zur Steuerung anderer Lastströme eingesetzt werden, wie z. B. zur Steuerung von Jalousien oder Vorhängen, Heizungen und/oder Klimaanlagen.

Typischerweise umfassen heutige Präsenzmelder eine Microprozessor-gestützte Steuerung, welche systemseitig z. B. durch Firmware oder von Benutzerseite z. B. über eine Fernbedienung wunschgemäss programmiert werden kann. Hierzu sind unter anderem Speichereinheiten vorhanden, in welchen beispielsweise Steuerprogramme, vom System vorgegebene Parameter, Umgebungsparameter und/oder benutzerdefinierte Parameter gespeichert sind. Derartige Parameter können von der Steuerungslogik des Präsenzmelders bei der Entscheidung, ob ein Beleuchtungsstrom eingeschaltet werden soll, mit einbezogen werden (z. B. Umgebungshelligkeit, gewünschte Helligkeit im Raum etc.). Um Verzögerungen der Steuerung des Beleuchtungsstroms wie z. B. die Nachlaufzeit steuern zu können, weisen die Präsenzmelder zudem eine Zeitgebereinheit auf, welche von der Steuerung ausgelesen bzw. ausgelöst werden kann.

Die Steuerung ist derart ausgebildet, dass sie die von dem Bewegungssensor gelieferten Bewegungssignale zu Triggersignalen aufbereiten und umwandeln kann. Beispielsweise können schwache Bewegungssignale, welche z. B. kürzer als eine vorgegebene Zeitperiode sind, ausgefiltert werden, da anzunehmen ist, dass die Signale im Störungsbereich liegen und keine echten Bewegungssignale darstellen. Dem Fachmann sind hierbei eine Vielzahl von Möglichkeiten bekannt, wie die Bewegungssignale der Sensoren z. B. zeitlich gefiltert werden können, um signifikante Triggersignale zu erhalten. Dabei können z. B. auch Totzeit-Filter vorgesehen sein, während welchen infolge eines ermittelten Triggersignals keine weiteren Triggersignale mehr generiert werden, obwohl die Bewegungssignale signifikant sind. Im Folgenden wird unter ermittelten Triggersignalen diejenigen aufbereiteten Signale verstanden, welche die Filter passieren und somit zur Steuerung des Beleuchtungsstroms herangezogen werden. Triggersignale können beispielsweise als normierte Steuerungspulse weitergegeben werden.

Wie auch bei herkömmlichen Präsenzmeldern wird beim erfindungsgemässen Verfahren mit jedem ermittelten Triggersignal ein neuer Startwert für eine Nachlaufzeit gesetzt. Der Startwert kann dabei ein Stand des Zeitgebers zum Zeitpunkt der Ermittlung des Triggersignals sein oder es kann auch ein Zeitgeber neu ausgelöst werden. Die Nachlaufzeit bezeichnet hierbei eine im Nominalbetrieb vorgesehene Verzögerung der Beleuchtungsstromschaltung, während welcher der Beleuchtungsstrom eingeschalten bleibt, wenn keine weiteren Triggersignale mehr erfolgen. Typische Nachlaufzeiten können im Bereich von 5 Minuten oder kürzer bis 30 Minuten oder länger liegen. Die Nachlaufzeit kann dabei fix vorgegeben, durch den Benutzer eingestellt oder beispielsweise durch adaptive Steuerungen in Abhängigkeit einer Häufigkeit der ermittelten Triggersignale laufend angepasst werden. Ein vollständiges Ablaufen der Nachlaufzeit impliziert dabei das Ausbleiben von Triggersignalen seit dem zuletzt gesetzten Startwert. Im Folgenden wird ohne Einschränkung der Allgemeinheit der Einfachheit halber von einer konstanten Nachlaufzeit ausgegangen.

Hier und im Folgenden ist mit "Abwesenheit" gemäss der Steuerungslogik des Präsenzmelders eine Situation bezeichnet, in welcher z. B. aufgrund von ausbleibenden Triggersignalen und Ablauf der entsprechenden Verzögerungen von der Abwesenheit von Personen im Erfassungsbereich ausgegangen wird und daher keine Beleuchtung erforderlich ist.

Erfindungsgemäss umfasst das Verfahren zur Steuerung des Beleuchtungsstroms einen Modus "Kurzzeit-Präsenz", welcher z. B. zum herkömmlichen Betriebsmodus vom Benutzer zugeschaltet werden kann oder bereits in einem Standard-Betriebsmodus implementiert ist. Mögliche Betriebsmodi umfassen dabei z. B. ein automatisches Abschalten des Kurzzeit-Präsenz-Modus wenn z. B. die Dauer der Nachlaufzeit im Bereich der Länge des Testintervalls liegt und somit der Kurzzeit-Präsenz-Modus nicht mehr sinnvoll ist. In diesem Fall ist der Kurzzeit-Präsenz-Modus generell nur aktiv, wenn die vom Benützer gewählte Nachlaufzeit grösser als das Testintervall ist. In einem weiteren möglichen Modus ist es auch denkbar, die Kurzzeit-Präsenz automatisch zu deaktivieren, wenn die vom Benutzer gewählte Nachlaufzeit einen gewissen Wert übersteigt, da in diesem Fall davon ausgegangen werden könnte, dass der Benutzer bewusst immer eine lange Nachlaufzeit haben will. Für diesen Fall kann der Benutzer die Kurzzeit-Präsenz aber auch wie bereits erwähnt einfach abschalten.

Im Kurzzeit-Präsenz-Modus ist ein Testintervall definiert, welches eine kürzere Zeitspanne als die Nachlaufzeit aufweist. Das Testintervall kann dabei fix vorgegeben, benutzerdefiniert oder an die Nachlaufzeit oder an Benutzungsgewohnheiten anpassbar sein. Das Testintervall kann auch adaptiv an die weiteren Parameter der Präsenzmeldersteuerung angepasst werden. Das Testintervall wird nur von einem zuerst ermittelten Triggersignal nach einer Abwesenheit ausgelöst und ohne erneuten Übergang in Abwesenheit im Präsenzmelder nicht mehr ausgelöst. Das zuerst ermittelte Triggersignal bezeichnet z. B. den Eintritt einer Person in den Erfassungsbereich, nachdem der überwachte Raum seit längerer Zeit unbelegt war. Mit anderen Worten läuft der Kurzzeit-Präsenz Modus nur an, wenn eine Person bei Abwesenheit das erste Mal den Raum betritt.

Aufgrund des zuerst ermittelten Triggersignals (und mit jedem weiteren ermittelten Triggersignal) wird ein Startwert für die Nachlaufzeit gesetzt und der Beleuchtungsstrom eingeschaltet, sofern die Systemparameter und die benutzerdefinierten Parameter dies erforderlich machen. Mit anderen Worten schaltet der Präsenzmelder im Kurzzeit-Präsenz-Modus in diesem Fall wie gewohnt bei Betreten einer Person des Erfassungsbereichs das Licht ein.

Bei Ablauf des Testintervalls wird aufgrund der ermittelten Triggersignale eine angenommene Aufenthaltsdauer bestimmt. Diese angenommene Anwesenheitsdauer wird mit einer vorgebbaren maximalen Aufenthaltsdauer verglichen. Die maximale Aufenthaltsdauer bezieht sich dabei auf einen maximalen Zeitraum während des Testintervalls, während welchem eine Präsenz von der Logik des Präsenzmelders als Kurzzeit-Präsenz angesehen wird. Stellt der Präsenzmelder fest, dass die detektierte Präsenz im Erfassungsbereich kurzzeitig war, d. h. war die angenommene Anwesenheitsdauer kürzer als die maximale Anwesenheitsdauer, so wird der vom Präsenzmelder gesteuerte Laststrom in jedem Fall abgeschaltet, sofern er bei Ablauf des Testintervalls eingeschaltet ist. Damit wird sichergestellt, dass im Falle einer nur kurzzeitigen Anwesenheit einer Person im Erfassungsbereich der Beleuchtungsstrom nicht während der gesamten Nachlaufzeit eingeschaltet ist, sondern bereits bei Ablauf des Testintervalls abgeschaltet wird.

Bevorzugt wird zur Bestimmung der angenommenen Aufenthaltsdauer ein Zeitintervall seit einem zuletzt ermittelten Triggersignal ermittelt und zum Vergleichen der angenommenen Aufenthaltsdauer mit der maximalen Aufenthaltsdauer das ermittelte Zeitintervall mit der Differenz aus Testintervall und maximaler Anwesenheitsdauer verglichen.

Die Bestimmung und das Vergleichen der angenommenen und maximalen Anwesenheitsdauer erfolgt bevorzugt also indirekt über die entsprechenden bezüglich dem Testintervall komplementären Zeitspannen. Das ermittelte Zeitintervall seit einem zuletzt ermittelten Triggerpuls entspricht dabei einer Abwesenheit während des Testintervalls und stellt somit einen bezüglich dem Testintervall komplementären Zeitraum dar. D. h. es wird bei Ablauf des Testintervalls überprüft, wie lange sich schon keine Person mehr im Erfassungsbereich aufgehalten hat.

Dieses Zeitintervall wird mit der Differenz aus Testintervall und maximaler Anwesenheitsdauer verglichen. Die Differenz stellt somit die bezüglich des Testintervalls komplementäre Zeitspanne dar, welche eine minimale Abwesenheitsdauer ergibt.

Übersteigt das ermittelte Zeitintervall die Differenz, d. h. wurde schon seit längerer Zeit als durch die Differenz vorgegeben kein Triggersignal mehr ermittelt, geht die Steuerungslogik des Präsenzmelders davon aus, das die Kurzzeit-Präsenz-Bedingung erfüllt ist. In diesem Fall wird der eingeschaltete Beleuchtungsstrom frühzeitig, d. h. vor Ablauf der Nachlaufzeit, bei Ablauf des Testintervalls abgeschaltet. Anderenfalls wird von einer Langzeit-Präsenz ausgegangen.

Somit kann auf einfache Art festgestellt werden, ob eine Person den Erfassungsbereich nur für kurze Zeit betreten hat, z. B. um ein Buch aus einer Bibliothek zu holen oder nur den Erfassungsbereich durchquert hat. Entsprechend kann das Licht vorzeitig, nämlich bereits bei Ablauf des Testintervalls, abgeschaltet werden, ohne dass es die gesamte Nachlaufzeit eingeschaltet bleibt.

Mit Vorteil wird zur Bestimmung des Zeitintervalls seit dem zuletzt ermittelten Triggersignal der aktuelle Stand des Zeitgebers ausgelesen und die Differenz aus dem ausgelesenen aktuellen Stand des Zeitgebers und dem aktuellen Startwert der Nachlaufzeit gebildet.

Da der Startwert der Nachlaufzeit bei jedem Triggersignal neu gesetzt wird, bezeichnet das Starten des Zeitgebers bzw. der gesetzte Startwert des Zeitgebers auch den Zeitpunkt der Ermittlung eines zuletzt ermittelten Triggersignals. Somit lässt sich aufgrund des aktuellen Standes der Nachlaufzeit auf einfache Weise die Zeit seit dem zuletzt ermittelten Triggersignal bestimmen. Wird der Startwert beispielsweise jedes Mal auf Null gesetzt, ergibt der aktuelle Stand der Nachlaufzeit gerade den Zeitintervall seit dem zuletzt ermittelten Triggersignal, d. h. die Differenzenbildung erübrigt sich. In einer Variante kann auch mit jedem ermittelten Triggersignal ein separater Zeitgeber ausgelöst oder ein Ermittlungszeitpunkt abgespeichert werden. Dies wäre allerdings zusätzlicher Aufwand, da der Startzeitpunkt bzw. der gesetzte Startwert für die Nachlaufzeit ohnehin gerade dem Zeitpunkt des zuletzt ermittelten Triggersignals entspricht.

Typische Werte betragen für das Testintervall 120 Sekunden und für die maximale Anwesenheitsdauer vorzugsweise 30 Sekunden. Die Nachlaufzeit ist typischerweise auf Zeiträume zwischen 5 und 30 Minuten eingestellt.

Eine maximale Anwesenheitsdauer bedeutet allerdings, dass die Person sich innerhalb einer kürzeren Zeitspanne wieder aus dem Erfassungsbereich entfernen muss, da davon auszugehen ist, dass der Sensor infolge detektierter Bewegungssignale systemisch bedingt selbst noch für eine kurze Nachlaufzeit Bewegungssignale liefert, welche in Triggersignale umgewandelt werden könnten.

Bleibt die Person länger im Raum, d. h. werden z. B. bei Ablauf des Testintervalls weiterhin Triggersignale ermittelt, ist das ermittelte Zeitintervall seit dem letzten Triggersignal gleich Null, womit die angenommene Anwesenheitsdauer dem Testintervall entspricht und somit von einer Langzeit-Präsenz ausgegangen wird.

Wie bereits eingangs erwähnt, erfolgt die Schaltung des Beleuchtungsstroms erfindungsgemäss unter Berücksichtigung von benutzerdefinierten und/oder vorgegebenen Systemparametern und/oder gemessenen Umgebungsparametern. Heutige Präsenzmelder weisen z. B. häufig zusätzliche Sensoren wie beispielsweise eine Photozelle zur Detektierung einer Ist-Helligkeit im Erfassungsbereich auf. Ein Benutzer kann zudem beispielsweise eine gewünschte Soll-Helligkeit vorgeben, welche im Erfassungsbereich vorhanden sein soll.

In einer bevorzugten Verfahrensvariante umfassen die Umgebungsparameter daher eine Ist-Helligkeit, welche eine aktuell gemessene Helligkeit im Erfassungsbereich angibt. Die Systemparameter umfassen bevorzugt eine Soll-Helligkeit, welche einer vorgebbaren gewünschten Helligkeit entspricht. Durch Vergleichen der Ist-Helligkeit mit der Soll-Helligkeit kann entschieden werden, ob ein Einschalten des Beleuchtungsstroms überhaupt erforderlich ist.

In einer bevorzugten Verfahrensvariante wird der Laststrom zum Zeitpunkt des zuerst ermittelten Triggersignals, d. h. bei erster Detektierung einer Präsenz nach einer Abwesenheit, nur eingeschaltet, wenn die Ist-Helligkeit kleiner als die Soll-Helligkeit ist. Die Ist-Helligkeit wird beispielsweise von einer Photozelle oder einem anders gearteten Sensor laufend aufgenommen und als Helligkeitswert zur Verarbeitung im Präsenzmelder bereitgestellt. Damit kann sichergestellt werden, dass bei Betreten des Erfassungsbereichs nach einer Abwesenheit das Licht eingeschaltet wird, wenn es beispielsweise gemäss Benutzervorgabe erforderlich ist.

In einer besonders bevorzugten Variante können die Systemparameter eine Minimal-Helligkeit umfassen, die kleiner ist als die Soll-Helligkeit. Zum Zeitpunkt des zuerst ermittelten Triggersignals wird in diesem Fall die Ist-Helligkeit mit der Minimal-Helligkeit verglichen und der Laststrom nur eingeschaltet, wenn die Ist-Helligkeit kleiner als die Minimal-Helligkeit ist.

Die Minimal-Helligkeit kann vom System vorgegeben, aus anderen Parametern berechnet (z. B. adaptiv) oder durch den Benutzer definiert sein. Die Minimal-Helligkeit ist kleiner als die Soll-Helligkeit und definiert einen Lichtwert, bei welchem unter gewissen Umständen (z. B. im Falle einer Kurzzeit-Präsenz) ein Beleuchtungsstrom noch nicht eingeschaltet zu werden braucht. Dabei liegt der Gedanke zugrunde, dass ein Raum nicht für jede Art von Tätigkeit gleich hell erleuchtet zu sein braucht. Während bei der normalen Tätigkeit wie z. B. Arbeit die Soll-Helligkeit gewährleistet sein soll, kann beispielsweise zum Holen eines Buches die Minimal-Helligkeit ausreichend sein. Der Präsenzmelder braucht in diesem Fall die Beleuchtung trotz ermitteltem ersten Triggersignal und einer Ist-Helligkeit, welche kleiner ist als die Soll-Helligkeit, nicht einzuschalten.

Unterschreitet die angenommene Anwesenheitsperiode einer Person im Erfassungsbereich die maximale Anwesenheitsdauer, d. h. ist die Kurzzeit-Präsenz-Bedingung erfüllt, so wird das Licht bevorzugt gar nie eingeschaltet..

Mit anderen Worten wird, wenn es im Raum genügend hell ist (heller als durch die Minimal-Helligkeit vorgegeben, z. B. ab 300 Lux), während aufgrund eines zuerst ermittelten Triggersignals das Licht nicht eingeschaltet. Ist die Ist-Helligkeit allerdings kleiner als die Minimal-Helligkeit, wird das Licht aufgrund des zuerst ermittelten Triggersignals wie üblich eingeschaltet. Übersteigt die Ist-Helligkeit die Soll-Helligkeit, ist ohnehin kein Licht einzuschalten.

Als Variante kann das Licht auch ohne Berücksichtigung der Minimal-Helligkeit immer aufgrund des zuerst ermittelt Triggersignals und nur in Abhängigkeit der Soll-Helligkeit eingeschaltet werden. Allerdings ist dies überflüssig, wenn die Ist-Helligkeit nur geringfügig unterhalb der Soll-Helligkeit liegt und der Raum für eine Kurzzeit-Präsenz somit hinreichend erhellt ist. In einer weiteren Variante kann die Minimal-Helligkeit auch auf Null gesetzt sein, sodass das Licht unabhängig von einer Ist-Helligkeit aufgrund des zuerst ermittelten Triggersignals niemals eingeschaltet wird. Diese Variante kann z. B. vorteilhaft sein, wenn eine gewisse Hintergrund-Helligkeit im Erfassungsbereich vorausgesetzt werden kann.

Besonders bevorzugt wird bei Ablauf der ersten Zeitspanne seit dem zuerst ermittelten Triggersignal der Laststrom eingeschaltet, wenn das ermittelte Zeitintervall kürzer wie die zweite Zeitspanne ist (d. h. die Kurzzeit-Präsenz-Bedingung nicht erfüllt ist und von einer Langzeit-Präsenz auszugehen ist) und die Ist-Helligkeit die Soll-Helligkeit unterschreitet.

Gemäss obengenannter Variante bleibt das Licht infolge des zuerst ermittelten Triggersignals während der ersten Zeitspanne ausgeschaltet, wenn eine Ist-Helligkeit zwischen Minimal-Helligkeit und Soll-Helligkeit liegt. Unterschreitet die Anwesenheitsperiode die vorgegebene Dauer der Kurzzeit-Präsenz, so wird das Licht gar nie eingeschaltet, obwohl eine Person den Raum betreten hat und ein zuerst ermitteltes Triggersignal ergangen ist. Bleibt die Person länger im Raum, wird das Licht nach Ablauf der ersten Zeitspanne eingeschaltet, sofern dies noch erforderlich ist, d. h. die Ist-Helligkeit unterhalb der Soll-Helligkeit liegt.

Besonders bevorzugt ist die Minimal-Helligkeit als Bruchteil der benutzerdefinierten oder vorgegebenen Soll-Helligkeit definiert. Der Bruchteil kann dabei fest vorgegeben sein. sodass sich die Minimal-Helligkeit automatisch aus der vorgebbaren Soll-Helligkeit errechnet. In einer Variante kann die Minimal-Helligkeit aber auch individuell und unabhängig von der Soll-Helligkeit als fester Wert vorgegeben werden. Besonders bevorzugt liegt die Minimal-Helligkeit 20% unterhalb der Soll-Helligkeit, d. h. die Minimal-Helligkeit definiert sich als 80% der Soll-Helligkeit. Es versteht sich, dass diese Werte jedoch stark von den individuellen Vorlieben des Benutzers abhängen können und daher bevorzugt weitgehend beliebig vorgebbar sind.

In einer vorteilhaften Variante des Verfahrens wird bei Ablauf des Testintervalls eine Ist-Helligkeit erneut mit der Soll-Helligkeit verglichen. Liegt die gemessene Ist-Helligkeit unterhalb der Soll-Helligkeit, wird in diesem Fall bei Nicht-Erfüllung der Kurzzeit-Präsenz-Bedingung der Laststrom eingeschaltet, falls er ausgeschaltet ist. Dabei ist es an sich unerheblich, aus welchem Grund der Laststrom bei Ablauf des Testintervalls ausgeschaltet blieb, d. h. ob der Laststrom nicht eingeschaltet wurde, weil die Ist-Helligkeit zum Zeitpunkt des zuerst ermittelten Triggersignals kleiner als die Soll-Helligkeit und grösser als die Minimal-Helligkeit oder grösser als die Soll-Helligkeit war. In jedem Fall wird bei Nicht-Erfüllung der Kurzzeit-Präsenz-Bedingung, d. h. wenn die Steuerungslogik von einer Langzeit-Präsenz ausgeht, die Beleuchtung bei Ablauf des Testintervalls eingeschaltet, sofern dies erforderlich ist, d. h. der Laststrom ausgeschaltet ist und die Umgebungs- und Systemparameter dies verlangen.

Mithin ist es jedoch wünschenswert, dass nicht erst bei Ablauf des Testintervalls das Licht eingeschaltet wird, wenn der Laststrom bei dem zuerst ermittelten Triggersignal ausgeschalten blieb. Wird ein Besprechungszimmer beispielsweise von mehreren Personen gleichzeitig betreten, kann die Besprechung bzw. eine Präsentation bei Ablauf des Testintervalls bereits im Gange sein, womit sich das verzögerte Einschalten des Lichts bei Ablauf des Testintervalls als störend auswirken kann.

Mit Vorteil werden daher die ermittelten Triggersignale während der ersten Zeitspanne seit dem zuerst ermittelten Triggersignal laufend auf ihre Häufigkeit analysiert. Bei Überschreiten einer vorgebbaren Schwellen-Häufigkeit wird der Laststrom, insbesondere bereits vor Ablauf der ersten Zeitspanne, eingeschaltet.

In einer Variante kann auch zu jedem Zeitpunkt während des Testintervalls eine angenommene Anwesenheitsdauer mit der maximalen Anwesenheitsdauer verglichen werden, wobei letztere für diesen Fall bevorzugt fest vorgegeben ist. Zu jedem Zeitpunkt wird in diesem Fall beispielsweise das Zeitintervall seit einem zuletzt ermittelten Triggersignal bestimmt und aufgrund einer Differenz der aktuell vergangen Zeitspanne und dem ermittelten Zeitintervall eine angenommene Anwesenheitsdauer bestimmt. Sobald diese den maximalen Wert übersteigt ist von einer Langzeit-Präsenz auszugehen und das Licht kann sofort eingeschaltet werden, sofern dies erforderlich ist. Das Licht wird in diesem Fall somit bereits bei Ablauf der maximalen Anwesenheitsdauer eingeschaltet.

Die Erfindung stellt auch einen Präsenzmelder zur Steuerung einer elektrischen Anwendung, insbesondere einer Lichtquelle, aufgrund von Bewegungen von Personen in einem Erfassungsbereich bereit. Der Präsenzmelder umfasst eine Detektierungseinheit zum Detektieren von durch die Bewegung einer Person erzeugten Bewegungssignalen. Weiter ist eine Verarbeitungseinheit vorhanden, welche die Bewegungssignale aufarbeiten und in Triggersignale umwandeln kann. Eine Zeitgebereinheit des Präsenzmelders stellt ein Zeitsignal bereit und eine Speichereinheit ist zum Speichern von Systemparametern vorgesehen. Weiter umfasst der Präsenzmelder eine programmierbare Steuereinheit, welche aufgrund der Triggersignale, der Zeitsignale, der Systemparameter und allenfalls durch zusätzliche Sensoren aufgenommene Umgebungsparameter ein Steuersignal für eine Schalteinheit zum Schalten eines Laststroms bereitstellt. Die Steuereinheit ist dabei zur Durchführung des erfindungsgemässen Verfahrens ausgebildet und programmiert.

Die Detektiereinheit ist zum Detektieren von Bewegungen einer Person im Erfassungsbereich ausgebildet und erzeugt auf der Basis der detektierten Bewegungen Bewegungssignale. Insbesondere erfolgt die Detektierung bevorzugt durch passive IR-Detektoren wie eingangs beschrieben. Die Verarbeitungseinheit ist derart ausgebildet und mit der Detektierungseinheit zusammengeschlossen, dass von der Detektierungseinheit erzeugte Bewegungssignale an die Verarbeitungseinheit zur Aufbereitung und Umwandlung in Triggersignale übermittelt werden können. Die Verarbeitungseinheit ist auch mit der Steuereinheit zusammengeschlossen, sodass die Triggersignale an die Steuereinheit übermittelt werden können. Der Zeitgeber ist dazu ausgebildet und derart mit der Steuereinheit zusammengeschlossen, dass ein Zeitsignal vom Zeitgeber an die Steuereinheit übermittelt werden kann. Die Speichereinheit ist zur Abspeicherung von vorgegebenen Parametern sowie zur Zwischenspeicherung von temporären Werten ausgebildet und derart mit der Steuereinheit zusammengeschlossen, dass diese die Parameter oder Werte in der Speichereinheit ablegen oder aus dieser auslesen kann. Die Steuereinheit ist zudem derart ausgebildet, dass sie ein Steuersignal erzeugen kann, welches an eine Schalteinheit zum Schalten eines Laststroms weitergegeben werden kann. Die Schalteinheit kann dabei Teil des Präsenzmelders oder eine externe Einheit sein.

Mit anderen Worten ist zur Durchführung des erfindungsgemässen Verfahrens die Verarbeitungseinheit zur Ermittlung von Triggersignalen durch Aufbereitung und Umwandlung von in der Detektierungseinheit detektierten Bewegungssignalen infolge einer Präsenz in einem Erfassungsbereich des Präsenzmelders ausgebildet. Die Steuereinheit ist weiter derart ausgebildet und programmiert, dass sie in Abhängigkeit von benutzerdefinierten und/oder vorgegebenen Systemparametern, welche in der Speichereinheit abgelegt sind, und/oder von allenfalls vorhandenen zusätzlichen Sensoren gemessenen Umgebungsparametern aufgrund eines zuerst ermittelten Triggersignals nach einer Abwesenheitsperiode ein Steuersignal für eine Schalteinheit zum Einschalten eines Laststroms erzeugen kann. Weiter ist die Steuereinheit derart ausgebildet und programmiert und mit dem Zeitgeber zusammengeschaltet, dass sie aufgrund eines vom Zeitgeber empfangenen Zeitsignals einen Startwert für eine Nachlaufzeit mit jedem Triggersignal setzt bzw. zwischenspeichert und nach Ablauf der Nachlaufzeit über ein entsprechende Steuersignal einen Laststrom ausschaltet, sofern dieser eingeschaltet ist. Das Ablaufen der Nachlaufzeit impliziert dabei die Abwesenheit von Triggersignalen seit dem zuletzt gesetzten Startwert.

Die Steuereinheit ist erfindungsgemäss dazu programmiert, bei einem zuerst ermittelten Triggersignal nach einer Abwesenheit den Ablauf eines Testintervalls zu messen, welches Testintervall kürzer ist als die Nachlaufzeit. Aufgrund der während des Testintervalls ermittelten Triggersignale wird eine angenommene Aufenthaltsdauer bestimmt.

Weiter ist die Steuereinheit dazu programmiert, die ermittelte angenommene Aufenthaltsdauer mit einer maximalen Aufenthaltsdauer, welche beispielsweise in der Speichereinheit abgelegt ist, zu vergleichen. Ist die angenommene Anwesenheitsdauer kürzer als die maximale Anwesenheitsdauer, so erzeugt die Steuereinheit aufgrund der Programmierung ein Steuersignal für die Schalteinheit zum Ausschalten des Laststroms, sofern dieser eingeschalten ist. Das Steuersignal kann dabei auch ergehen, wenn der Laststrom nicht eingeschaltet ist, wobei die Schalteinheit in diesem Fall nicht schaltet.

Werte für beispielsweise die Nachlaufzeit, das Testintervall oder die maximale Anwesenheitsdauer sind bevorzugt in der Speichereinheit abgelegt. Es versteht sich, dass auch beliebige andere Werte, welche zur Durchführung des Verfahrens erforderlich sind, in der Speichereinheit abgelegt bzw. zwischengespeichert werden können. Typischerweise können auch weitere Komponenten des Präsenzmelders auf die Speichereinheit zugreifen. Ebenso kann beispielsweise das Zeitsignal sofern erforderlich von weiteren Komponenten genutzt werden.

Bevorzugt umfasst die Steuereinheit eine zentrale Prozessoreinheit, welche derart programmiert ist, dass die Verfahrensschritte durchgeführt werden. Es versteht sich, dass die obige Aufteilung nach Einheiten in erster Linie auf funktionellen Kriterien beruht und nicht notwendigerweise physikalisch getrennte Baueinheiten bezeichnet. Insbesondere können verschiedene der Komponenten auch in einer einzigen Datenverarbeitungseinheit bzw. auf einem Chip zusammengefasst sein. Die Programmierung des erfindungsgemässen Verfahrens kann dabei z. B. als Maschinencode in der Speichereinheit abgelegt sein oder durch eine feste Vernetzung auf einem Chip in der Form von Hardware vorliegen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen schematisch:
- Fig. 1: Verläufe von Bewegungssignalen, Triggersignalen, einem Timer für eine Nachlaufzeit und eine Lichteinschaltdauer, wie sie aus dem Stand der Technik bekannt sind;
- Fig. 2: Verläufe der Grössen gemäss Fig. 1 sowie zusätzlich den Verlauf eines Timers für die Detektierung einer Kurzzeit-Präsenz und eine weitere Lichteinschaltdauer, wie sie sich aus einem erweiterten Betriebsmodus des erfindungsgemässen Verfahrens ergibt, für eine kurzzeitige Präsenz;
- Fig. 3: Verläufe der Grössen gemäss Fig. 2 im Fall einer Langzeit-Präsenz;
- Fig. 4: Komponenten eines Präsenzmelders.

Grundsätzlich sind in den Figuren gleiche Teile mit gleichen Bezugszeichen versehen.

### Wege zur Ausführung der Erfindung

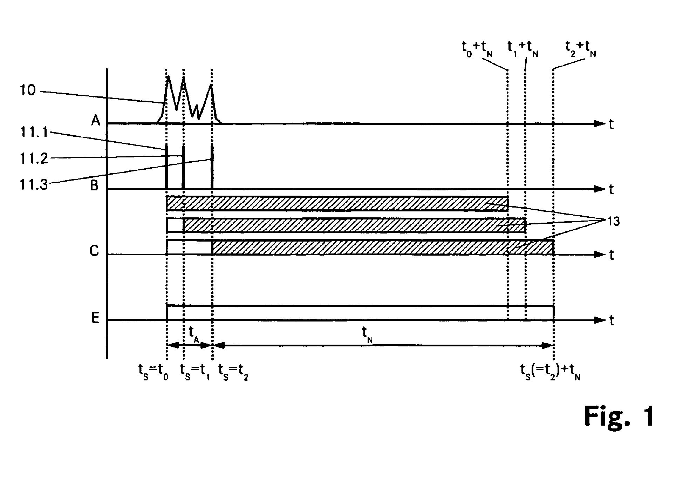

Figur 1 zeigt schematisch die relativen zeitlichen Abläufe von Bewegungssignalen A, daraus aufbereiteter Triggersignale B, eines Timers C für eine Nachlaufzeit sowie eine Lichteinschaltdauer E in einem herkömmlichen Betriebsmodus eines Präsenzmelders, welcher auch bei bekannten Geräten zum Einsatz kommt. Auf der X-Achse des Diagramms ist die Zeit aufgetragen, während die Grössen A, B, C und E übereinander auf der Y-Achse aufgetragen sind.

Die Bewegungssignale A sind durch eine Lichtkurve 10 dargestellt, welche einem von einem Detektor gelieferten Ausgangssignal infolge einer detektieren IR-Signatur entspricht. Die Bewegungssignale A werden in einer Verarbeitungseinheit des Präsenzmelders zu Triggersignalen B aufbereitet, welche z. B. als normierte Pulse 11 an weitere Komponenten des Präsenzmelders weitergegeben werden. In der Darstellung der Fig. 1 wurden in einem Zeitraum t_{A} drei Triggersignale bzw. Pulse 11.1-11.3 ermittelt. Ein zuerst ermittelter Puls 11.1 erfolgt dabei zu einem Zeitpunkt t₀, während ein zuletzt ermittelter Puls 11.3 zum Zeitpunkt t₂ ergeht. Die Pulse 11 erfolgen dabei über einen Zeitraum t_{A}, bestimmt durch die Ermittlungszeitpunkte t₀ und t₂ des zuerst und des zuletzt ermittelten Triggerpulses 11.1 und 11.3. Der Zeitraum t_{A} entspricht somit einer angenommenen Aufenthaltsdauer einer Person im Erfassungsbereich.

Mit dem ersten Puls 11.1 zum Zeitpunkt t₀ wird ein Beleuchtungsstrom auf "Ein" gestellt, d. h. der Beleuchtungsstrom wird eingeschaltet und die Lichteinschaltdauer E beginnt zu laufen. t₀ bezeichnet dabei einen ersten Startwert tₛ=t₀ für eine Nachlaufzeit 13 der Dauer t_{N}. Sofern nach dem ersten Puls 11.1 keine weiteren Triggersignale B mehr erfolgen, wird das Licht bzw. der Beleuchtungsstrom zu einem Zeitpunkt tₛ(=t₀)+t_{N} ausgeschaltet. In den vorliegenden Beispielen ist die Dauer t_{N} der Nachlaufzeit 13 jeweils als konstant angenommen. Wie eingangs erwähnt kann eine Nachlaufzeit aber auch adaptiv gestaltet werden, um einen Betrieb des Präsenzmelders weiter an die Erfordernisse anzupassen.

Ein weiterer aus dem Bewegungssignal A ermittelter Triggerpuls 11.2 zum Zeitpunkt t, ergibt einen neuen Startpunkt tₛ=t₁ für die Nachlaufzeit 13. Bei fehlenden weiteren Triggersignalen B endet eine Lichteinschaltdauer damit bei tₛ(=t₁)+t_{N}.

Ein dritter und letzter Triggerpuls 11.3 zum Zeitpunkt t₂ bedingt wiederum eine Neusetzung des Startwerts tₛ=t₂ für die Nachlaufzeit 13. Da keine weitere Triggersignale B mehr erfolgen, läuft die Nachlaufzeit 13 ab dem Zeitpunkt tₛ=t₂ vollständig ab, wodurch das Licht zum Zeitpunkt tₛ(=t₂)+t_{N} ausgeschaltet wird.

Eine Anwesenheitsperiode t_{A}=t₂-t₀ einer Person im Erfassungsbereich kann somit im Vergleich zur Dauer t_{N} der nominalen Nachlaufzeit 13 sehr kurz sein, d. h. t_{A<<}t_{N}. Das Licht bleibt als für den grössten Teil der Lichteinschaltdauer E, nämlich für die Dauer t_{N}, umsonst eingeschaltet, da sich niemand mehr im Raum aufhält.

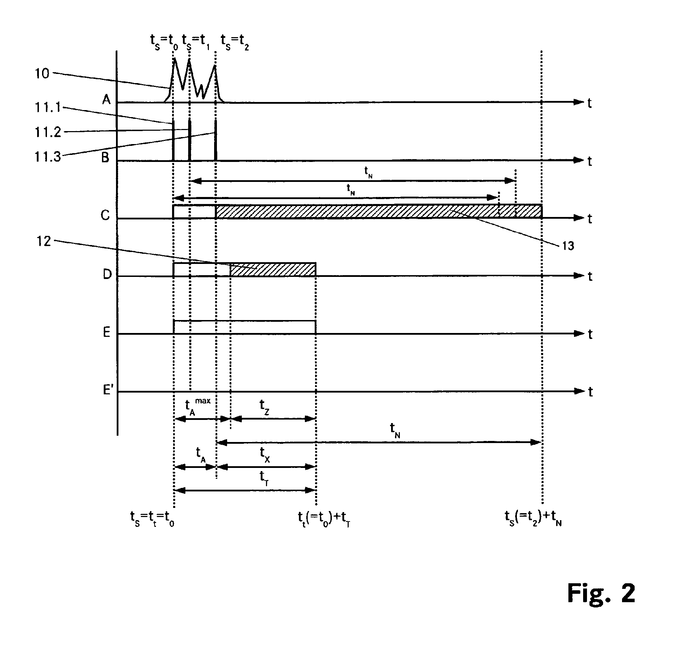

Figur 2 zeigt dieselbe Situation wie in Fig. 1, wobei jedoch das erfindungsgemässe Verfahren eingesetzt wird.

Wie zuvor wird der erste Puls 11.1 zum Zeitpunkt t₀ ermittelt. Im Folgenden werden zwei Situationen unterschieden: Die Lichteinschaltdauer E entspricht einem Betriebsmodus des Präsenzmelders, bei welchem das Licht bei dem zuerst ermittelten Triggerpuls 11.1 eingeschaltet wird, z. B. wenn eine gemessene Ist-Helligkeit der Umgebung unterhalb einer Minimal-Helligkeit liegt, sodass auch für eine Kurzzeit-Präsenz nicht genügend Helligkeit vorhanden ist. Die Lichteinschaltdauer E' hingegen entspricht einer Situation, bei welcher das Licht bei einer Kurzzeit-Präsenz nicht eingeschaltet zu werden braucht, da die Ist-Helligkeit z. B. grösser als eine Minimal-Helligkeit ist, aber kleiner als eine vom Benutzer vorgegebene Soll-Helligkeit.

Dem entsprechend beginnt die Lichteinschaltdauer E mit Ermittlung des ersten Triggerpulses 11.1 zum Zeitpunkt t₀ zu laufen, d. h. ein Beleuchtungsstrom wird auf "Ein" gestellt und das Licht ist eingeschaltet. Die Lichteinschaltdauer E' hingegen bleibt ausgeschaltet.

Der Ermittlungszeitpunkt t₀ des ersten Triggerpulses 11.1 bezeichnet einen ersten Startwert tₛ=t₀ für die Nachlaufzeit 13 der Dauer t_{N}. Mit t₀ wird im Kurzzeit-Präsenz-Modus auch ein Startwert tₜ=t₀ eines zweiten Timers D für die Messung eines vorgebbaren Testintervalls t_{T} gesetzt. Bei Ablauf des Testintervalls t_{T}, d. h. zum Zeitpunkt tₜ(=t₀)+t_{T}, wird erfindungsgemäss ein Zeitintervall t_{X}=t₁-t₂ seit einem zuletzt ergangenen Triggerpuls 11.3 ermittelt. Aus der Fig. 2 ist ersichtlich, dass t_{X} gerade dem aktuellen Stand des Timers C der Nachlaufzeit 13 seit dem Startwert t_{S}=t₂ entspricht. t_{X} kann somit anhand des Timers C direkt ausgelesen werden.

Das Zeitintervall t_{X} wird mit einer vorgegebenen Zeitspanne 12 der Dauer t_{Z} verglichen. t_{Z} ergibt sich dabei aus der Differenz des Testintervalls t_{T} und einer maximalen Aufenthaltsdauer t_{A}^{max}, sodass t_{T}=t_{A}^{max}+t_{Z}. Die maximale Aufenthaltsdauer t_{A}^{max} bezeichnet einen maximalen Zeitraum einer detektierten Anwesenheit, welcher innerhalb des Testintervalls t_{T} noch als Kurzzeit-Präsenz erachtet wird.

In der Situation der Fig. 2 ist das Zeitintervall t_{X} länger als die Zeitspanne t_{Z}, d. h. der Zeitpunkt t₂ des zuletzt ermittelten Triggerpulses 11.3 liegt zum Zeitpunkt tₜ+t_{T} länger zurück, als die Zeitspanne t_{Z}. Die Aufenthaltsdauer t_{A} ist demnach kürzer als die maximale Aufenthaltsdauer t_{A}^{max}. Die erfindungsgemässe Bedingung für eine Kurzzeit-Präsenz ist somit erfüllt.

Im Fall der Lichteinschaltdauer E wird somit gemäss dem erfindungsgemässen Verfahren der Beleuchtungsstrom bereits bei Ablauf der Zeitspanne t_{T} seit dem Startwert tₜ wieder abgeschaltet. Die gesamte Lichteinschaltdauer E beträgt daher t_{T} und ist somit kürzer als die nominale Nachlaufzeit t_{N}.

Im Modus der Lichteinschaltdauer E' wird aufgrund der erfüllten Kurzzeit-Präsenz-Bedingung das Licht auch bei Ablauf der Zeitspanne t_{T} nicht eingeschaltet. Die gesamte Lichteinschaltdauer E' beträgt somit Null, d. h. das Licht wurde gar nie eingeschaltet.

Mit anderen Worten erkennt der Präsenzmelder eine nur kurzzeitige Präsenz einer Person im Erfassungsbereich. Je nach Betriebsmodus schaltet der Präsenzmelder somit bei Ablauf der ersten Zeitspanne t_{T} das eingeschaltete Licht ab oder schaltet das ausgeschaltete Licht erst gar nicht ein.

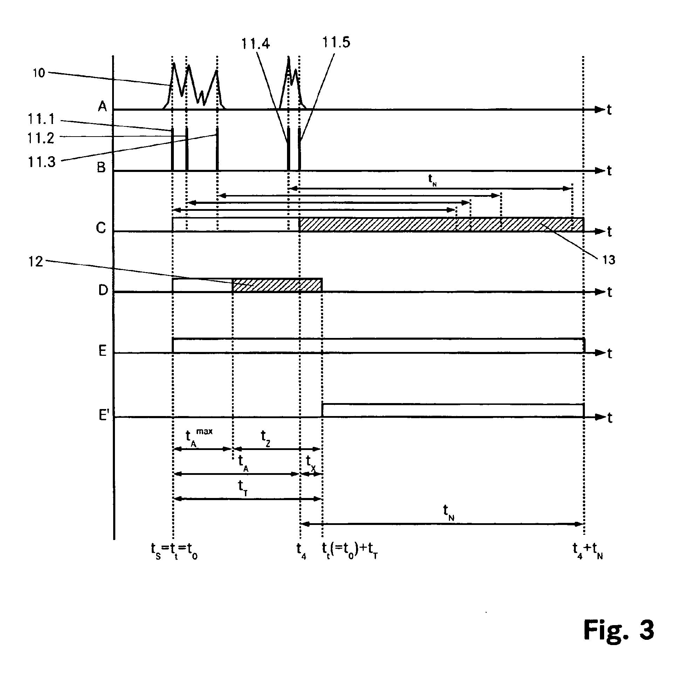

Figur 3 zeigt eine Situation, bei ebenfalls das erfindungsgemässe Verfahren eingesetzt wird. Im Gegensatz zu der Situation der Fig. 2 werden allerdings 5 Pulse 11.1-11.5 aus der Lichtkurve 10 des Bewegungssignals A über einen längeren Zeitraum t_{A} ermittelt.

Ein letzter Triggerpuls 11.5 erfolgt dabei zu einem Zeitpunkt t₄, welcher einen letzten Startwert t_{S}=t₄ für die Nachlaufzeit 13 definiert. t₀ bezeichnet wie zuvor den Ermittlungszeitpunkt des ersten Triggerpulses 11.1. Die gesamte angenommene Anwesenheitsdauer t_{A} definiert sich somit als t_{A}=t₄-t₀.

Wie zuvor bei Fig. 2 werden die Situationen der Lichtschaltdauer E und E' unterschieden. Dem entsprechend beginnt die Lichteinschaltdauer E mit Ermittlung des ersten Triggerpulses 11.1 zum Zeitpunkt t₀ zu laufen, d. h. ein Beleuchtungsstrom wird auf "Ein" gestellt und das Licht ist eingeschaltet. Die Lichteinschaltdauer E' hingegen bleibt ausgeschaltet, da die Ist-Helligkeit oberhalb einer Minimal-Helligkeit liegt und somit für eine zunächst angenommene Kurzzeit-Präsenz ausreicht.

Der zweite Timer D des Kurzzeit-Präsenz-Modus wird wiederum mit t₀ gestartet (tₜ=t₀). Bei Ablauf der Zeitspanne t_{T}, d. h. zum Zeitpunkt tₜ(=t₀)+t_{T}, wird wiederum ein Zeitintervall t_{X}=tₜ+t_{T}-t₄ seit dem zuletzt ergangenen Triggerpuls 11.5 ermittelt. Das Zeitintervall t_{X} wird zur Überprüfung der Kurzzeit-Präsenz-Bedingung mit der Zeitspanne 12 der Dauer t_{Z} verglichen. In der Situation der Fig. 3 ist das Zeitintervall t_{X} kürzer als die Zeitspanne t_{Z}, d. h. der Zeitpunkt t₄ des zuletzt ermittelten Triggerpulses 11.5 liegt zum Zeitpunkt tₜ+t_{T} weniger lang zurück, als die Zeitspanne t_{Z}. Die angenommene Aufenthaltsdauer t_{A} ist somit länger, als die maximale Aufenthaltsdauer t_{A}^{max} und die Kurzzeit-Präsenz-Bedingung ist somit nicht erfüllt.

Im Modus der Lichteinschaltdauer E bleibt der Beleuchtungsstrom bei Ablauf der Zeitspanne t_{T} daher eingeschaltet, und läuft für die gesamte nominale Nachlaufzeit 13 der Dauer t_{N} (unter der Voraussetzung, dass keine weiteren Triggerpulse mehr ermittelt werden). Die gesamte Lichteinschaltdauer E beträgt in diesem Fall t₄+t_{N}, was dem normalen Betrieb des Präsenzmelders entspricht.

Im Modus der Lichteinschaltdauer E' hingegen wird aufgrund der angenommenen Langzeit-Präsenz das Licht bei Ablauf der Zeitspanne t_{T} eingeschaltet, da die Ist-Helligkeit zwar grösser als die Minimal-Helligkeit ist, aber die gewünschte Soll-Helligkeit nicht erreicht ist. Das Licht bleibt auch in diesem Fall bis zum Ablauf der vom zuletzt ermittelten Triggerpuls 11.5 ausgelösten Nachlaufzeit 13 eingeschaltet, d. h. bis zum Zeitpunkt t₄+t_{N}, sofern keine weiteren Triggerpulse ermittelt werden.

Mit anderen Worten erkennt der Präsenzmelder, dass aufgrund der Triggerpulse 11.1 bis 11.5 davon auszugehen ist, dass sich eine Person während der Zeitspanne t_{T} länger im Erfassungsbereich aufgehalten hat, als eine maximale Aufenthaltsdauer t_{A}^{max} für eine Kurzzeit-Präsenz. Es wird daher von eine Langzeit-Präsenz ausgegangen, weshalb bei Ablauf der ersten Zeitspanne t_{T} im Fall E das Licht eingeschaltet bleibt und im Fall E' das Licht eingeschaltet wird. Bei fehlender Ermittlung weiterer Triggerimpulse bleibt das Licht in beiden Fällen wie gewohnt bis zum Ablauf der Nachlaufzeit eingeschaltet.

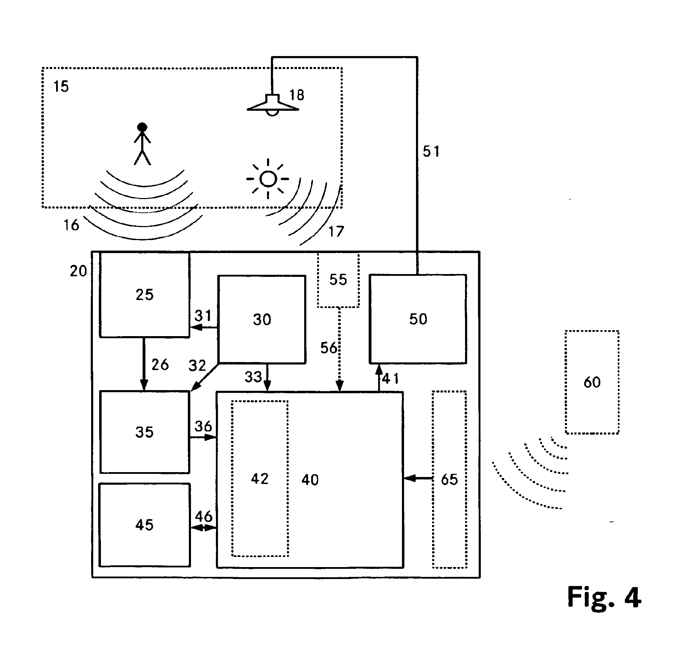

Figur 4 zeigt schematisch mögliche Komponenten eines erfindungsgemässes Präsenzmelders 20. Der Präsenzmelder 20 umfasst eine Detektierungseinheit 25, welche aus einem Erfassungsbereich 15 einfallende IR-Strahlung 16 detektieren und in ein Bewegungssignal umwandeln kann. Die Bewegungssignale werden über eine Verbindung 26 an eine Verarbeitungseinheit 35 des Präsenzmelders 20 weitergegeben. Die Verarbeitungseinheit 35 ist derart ausgebildet, dass die Bewegungssignale aufgearbeitet und in Triggersignale umgewandelt werden können. Die Triggersignale werden über eine Verbindung an eine Steuereinheit 40 weitergegeben. Ein Zeitgeber 30 ist derart ausgebildet, dass ein Zeitsignal erzeugt wird und über Verbindungen 31-33 z. B. an die Detektiereinheit 25, die Verarbeitungseinheit 35 und die Steuereinheit 40 übermittelt werden kann. Die Steuereinheit 40 ist mit einer Speichereinheit 45 zum Ablegen und Auslesen von Parametern oder anderen Werten verbunden. Bevorzugt umfasst die Steuereinheit 40 einen eigenen Programmspeicher 42, in welchem das erfindungsgemässe Verfahren z. B. in Maschinencode ausprogrammiert abgelegt ist. Es versteht sich, dass das entsprechende Programm auch in der zusätzlichen Speichereinheit 45 abgelegt sein kann Die Steuereinheit 40 ist zudem derart ausgebildet, dass sie ein Steuersignal über eine Steuerleitung 41 an eine Schalteinheit 50 übermitteln kann. Wie oben bereits erwähnt, kann die Schalteinheit 50 dabei auch extern ausgebildet sein und über eine Bus-System gesteuert werden. Die Schalteinheit 50 steuert einen Laststrom 51, beispielsweise für eine Lampe 18.

Der Präsenzmelder 20 kann zudem einen Sensor 55 für eine Umgebungshelligkeit 17 wie z. B. eine Photozelle umfassen, welche eine Ist-Helligkeit im Erfassungsbereich 15 an die Steuereinheit 40 übermittelt. Zudem kann eine Fernbedienung 60 vorgesehen sein, mit welcher eine Benutzer die Steuereinheit 40 über einen in diesem Fall vorhandenen Empfänger 65 des Präsenzmelders 20 steuern bzw. programmieren kann. Der Präsenzmelder 20 kann auch ein (nicht dargestelltes) Bedienungspanel aufweisen bzw. an ein solches angeschlossen sein, welches die Eingabe von Parametern bzw. allgemein die benutzerseitige Steuerung ermöglicht.

Es versteht sich, dass die dargestellten Komponenten und deren Verbindungen untereinander nicht erschöpfend sind. Ebenso können, wie bereits oben erwähnt, die einzelnen Komponenten auch in einer einzigen Schaltung z. B. auf einem Microprozessor umgesetzt sein. Die Aufteilung in Einheiten beruht einzig auf funktionellen Eigenschaften der Komponenten und bezeichnet nicht notwendigerweise auch eine physikalische Aufteilung. Beispielsweise ist es auch denkbar, dass die Steuereinheit die Funktion der Verarbeitungseinheit übernimmt und der Zeitgeber in der Steuereinheit vorhanden ist.

Zusammenfassend ist festzustellen, dass die Erfindung ein Verfahren zur Steuerung eines Präsenzmelders bereitstellt, welches auf einfache Art das Erkennen einer nur kurzzeitigen Präsenz in einem Erfassungsbereich des Präsenzmelders erlaubt. Dabei wird nach einer Abwesenheit a priori von einer Kurzzeit-Präsenz ausgegangen und erst nach Ablauf einer gewissen Zeitspanne, d. h. eines Testintervalls, überprüft, ob eine Anwesenheit während des Testintervalls als Kurzzeit-Präsenz einzuordnen ist. Entsprechend wird bei Ablauf des Testintervalls bei einer detektierten Kurzzeit-Präsenz ein Laststrom für beispielsweise ein Licht ausgeschaltet, sofern er zu diesem Zeitpunkt eingeschaltet ist. Damit kann Energie gespart werden, da der Laststrom nicht für die üblicherweise vorgesehen und deutlich längere Nachlaufzeit eingeschalten bleibt. Beim Betrieb eines Präsenzmelders mit dem erfindungsgemässen Verfahren versteht es sich, dass auch Triggersignale von mehreren Präsenzmeldern z. B. im Master-Slave- oder Parallel-Betrieb genutzt werden können bzw. allgemein Triggersignale von anderen Systemkomponenten z. B. eines Heimautomationssystems miteinbezogen werden können.

## Patentansprüche

1. Verfahren zur Steuerung einer elektrischen Anwendung, insbesondere einer Lichtquelle (18), mit einem Präsenzmelder (20), umfassend die Schritte
a) Ermittlung von Triggersignalen (11.1-11.5) zur Steuerung eines Laststroms (51) durch Aufbereitung und Umwandlung von im Präsenzmelder detektierten Bewegungssignalen (A) infolge ein Präsenz in einem Erfassungsbereich des Präsenzmelders (20);
b) Einschalten eines Laststroms (51) in Abhängigkeit von benutzerdefinierten und/oder vorgegebenen Systemparametern und/oder gemessenen Umgebungsparametern aufgrund eines zuerst ermittelten Triggersignals (11.1) nach einer Abwesenheitsperiode;
c) Setzen eines aktuellen Startwerts (t_{S}) eines Zeitgebers (30) für eine Nachlaufzeit (13) mit jedem ermittelten Triggersignal (11.1-11.5), wobei bei Ausbleiben nachfolgender Triggersignale der Laststrom (51) nach Ablauf der Nachlaufzeit (13) ausgeschaltet wird, sofern er eingeschaltet ist;
**gekennzeichnet durch die Schritte**
d) Ermittlung einer angenommenen Aufenthaltsdauer (t_{A}) aufgrund der ermittelten Triggersignale (11.1-11.5) während eines vom zuerst ermittelten Triggersignal (11.1) ausgelösten Testintervalls (t_{T}) bei Ablauf des Testintervalls (t_{T}), wobei das Testintervall (t_{T}) kürzer ist als die Dauer (t_{N}) der Nachlaufzeit (13);
e) Vergleichen der ermittelten angenommenen Aufenthaltsdauer (t_{A}) mit einer vorgebbaren maximalen Aufenthaltsdauer (t_{A}^{max});
f) Ausschalten des Laststroms (51) bei Ablauf des Testintervalls (t_{T}), sofern er eingeschaltet ist und sofern die angenommene Anwesenheitsdauer (t_{A}) kleiner ist als die maximale Anwesenheitsdauer (t_{A}^{max}).

2. Verfahren nach Anspruch 1, **dadurch gekennzeichnet, dass** zur Bestimmung der angenommenen Aufenthaltsdauer (t_{A}) ein Zeitintervall (t_{X}) seit einem zuletzt ermittelten Triggersignal (11.3, 11.5) ermittelt wird und zum Vergleichen der angenommenen Aufenthaltsdauer (t_{A}) mit der maximalen Aufenthaltsdauer (t_{A}^{max}) das ermittelte Zeitintervall (t_{X}) mit der Differenz aus Testintervall (t_{T}) und maximaler Anwesenheitsdauer (t_{A}^{max})verglichen wird.

3. Verfahren nach Anspruch 2, **dadurch gekennzeichnet, dass** zur Bestimmung des Zeitintervalls (t_{X}) seit dem zuletzt ermittelten Triggersignal (11.3, 11.5) der aktuelle Stand des Zeitgebers (30) ausgelesen wird und die Differenz aus dem ausgelesenen aktuellen Stand des Zeitgebers (30) und dem aktuellen Startwert (t_{S}) der Nachlaufzeit (13) gebildet wird.

4. Verfahren nach einem der Ansprüche 1 bis 3, **dadurch gekennzeichnet, dass** das Testintervall (t_{T}) 120 Sekunden und die maximale Anwesenheitsdauer (t_{A}^{max}) vorzugsweise 30 Sekunden beträgt.

5. Verfahren nach einem der Ansprüche 1 bis 4, **dadurch gekennzeichnet, dass** die Umgebungsparameter eine Ist-Helligkeit (17) umfassen, welche eine aktuell gemessene Helligkeit im Erfassungsbereich angibt, und die Systemparameter eine Soll-Helligkeit umfassen, welche einer vorgebbaren gewünschten Helligkeit entspricht.

6. Verfahren nach Anspruch 5, **dadurch gekennzeichnet, dass** der Laststrom (51) zum Zeitpunkt des zuerst ermittelten Triggersignals (11.1) nur eingeschaltet wird, wenn die Ist-Helligkeit (17) kleiner als die Soll-Helligkeit ist.

7. Verfahren nach Anspruch 5, **dadurch gekennzeichnet, dass** die Systemparameter eine Minimal-Helligkeit umfassen, die kleiner ist als die Soll-Helligkeit, wobei zum Zeitpunkt des zuerst ermittelten Triggersignals (11.1) die Ist-Helligkeit (17) mit der Minimal-Helligkeit verglichen wird und der Laststrom (51) nur eingeschaltet wird, wenn die Ist-Helligkeit (17) kleiner als die Minimal-Helligkeit ist.

8. Verfahren nach Anspruch 7, **dadurch gekennzeichnet, dass** sich die Minimal-Helligkeit als Bruchteil der benutzerdefinierten Soll-Helligkeit ergibt, wobei die Minimal- Helligkeit bevorzugt 80% der Soll-Helligkeit beträgt.

9. Verfahren nach einem der Ansprüche 6 bis 8, **dadurch gekennzeichnet, dass** im Falle die angenommene Anwesenheitsdauer (t_{A}) länger ist als die maximale Anwesenheitsdauer (t_{A}^{max}), der Laststrom (51) bei Ablauf des Testintervalls (t_{T}) eingeschaltet wird, sofern die Ist-Helligkeit (17) zu diesem Zeitpunkt kleiner als die Soll-Helligkeit ist und der Laststrom (51) ausgeschaltet ist.

10. Verfahren nach Anspruch 1 bis 9, **dadurch gekennzeichnet, dass** die ermittelten Triggersignale (11.1-11.5) während dem Testintervall (t_{T}) laufend auf ihre Häufigkeit analysiert werden und bei Überschreiten einer vorgebbaren Schwellen-Häufigkeit der Laststrom (51), insbesondere bereits vor Ablauf des Testintervalls (t_{T}), in Abhängigkeit von benutzerdefinierten und/oder vorgegebenen Systemparametern und/oder gemessenen Umgebungsparametern eingeschaltet wird, sofern er ausgeschaltet ist.

11. Präsenzmelder zur Steuerung einer elektrischen Anwendung, insbesondere einer Lichtquelle (18), aufgrund von Bewegungen von Personen in einem Erfassungsbereich mit einer Detektierungseinheit (25) zum Detektieren von durch die Bewegung einer Person erzeugten Bewegungssignalen (A), und einer Verarbeitungseinheit (35), welche die Bewegungssignale (A) aufarbeiten und in Triggersignale (B) umwandeln kann, wobei ein Zeitgeber (30) zur Bereitstellung eines Zeitsignals und eine Speichereinheit (45) zum Speichern von Systemparametern wie Soll-Helligkeit und/oder Minimal-Helligkeit vorhanden ist, und eine programmierbare Steuereinheit (40), welche aufgrund der Triggersignale (B), des Zeitsignals der Systemparameter und allenfalls durch zusätzliche Sensoren aufgenommene Umgebungsparameter ein Steuersignal für eine Schalteinheit (50) zum Schalten eines Laststroms (51) bereitstellt, **dadurch gekennzeichnet, dass** die Steuereinheit (40) zur Durchführung des Verfahrens gemäss einem der Ansprüche 1 bis 10 ausgebildet und programmiert ist.

## Claims

1. Method for controlling an electrical appliance, particularly a light source (18), having a presence detector (20), comprising the following steps:
a) trigger signals (11.1-11.5) for controlling a load current (51) by conditioning and converting movement signals (A) detected in the presence detector are ascertained as a result of a presence in a sensing range of the presence detector (20);
b) a load current (51) is switched on as a function of user-defined and/or prescribed system parameters and/or measured environmental parameters on the basis of an initially ascertained trigger signal (11.1) after a period of absence;
c) a current starting value (tₛ) for a timer (30) for a lag time (13) is set with each ascertained trigger signal (11.1-11.5), wherein if there are no subsequent trigger signals then the load current (51) is switched off, provided that it is switched on, after the lag time (13) has elapsed;
**characterized by** the following steps:
d) an assumed length of stay (t_{A}) is ascertained on the basis of the ascertained trigger signals (11.1-11.5) during a test interval (t_{T}), initiated by the initially ascertained trigger signal (11.1), when the test interval (t_{T}) elapses, wherein the test interval (t_{T}) is shorter than the duration (t_{N}) of the lag time (13);
e) the ascertained assumed length of stay (t_{A}) is compared with a prescribable maximum length of stay (t_{A}^{max}) ;
f) the load current (51) is switched off when a test interval (t_{T}) elapses, provided that it is switched on and provided that the assumed length of presence (t_{A}) is shorter than the maximum length of presence (t_{A}^{max}).

2. Method according to Claim 1, **characterized in that** the assumed length of stay (t_{A}) is determined by ascertaining a time interval (t_{X}) since a most recently ascertained trigger signal (11.3, 11.5), and the assumed length of stay (t_{A}) is compared with the maximum length of stay (t_{A}^{max}) by comparing the ascertained time interval (tₓ) with the difference between the test interval (t_{T}) and the maximum length of presence (t_{A}^{max}).

3. Method according to Claim 2, **characterized in that** the time interval (tₓ) since the most recently ascertained trigger signal (11.3, 11.5) is determined by reading the current reading on the timer (30) and forming the difference between the read current reading on the timer (30) and the current starting value (tₛ) for the lag time (13).

4. Method according to one of Claims 1 to 3, **characterized in that** the test interval (t_{T}) is 120 seconds and the maximum length of presence (t_{A}^{max}) is preferably 30 seconds.

5. Method according to one of Claims 1 to 4, **characterized in that** the environmental parameters comprise an actual brightness (17), which indicates a currently measured brightness in the sensing range, and the system parameters comprise a target brightness, which corresponds to a prescribable desired brightness.

6. Method according to Claim 5, **characterized in that** the load current (51) is switched on at the instant of the initially ascertained trigger signal (11.1) only if the actual brightness (17) is less than the target brightness.

7. Method according to Claim 5, **characterized in that** the system parameters comprise a minimum brightness, which is less than the target brightness, wherein the actual brightness (17) is compared with the minimum brightness at the instant of the initially ascertained trigger signal (11.1), and the load current (51) is switched on only if the actual brightness (17) is less than the minimum brightness.

8. Method according to Claim 7, **characterized in that** the minimum brightness is obtained as a fraction of the user-defined target brightness, wherein the minimum brightness is preferably 80% of the target brightness.

9. Method according to one of Claims 6 to 8, **characterized in that** if the assumed length of presence (t_{A}) is longer than the maximum length of presence (t_{A}^{max}) then the load current (51) is switched on when the test interval (t_{T}) elapses, provided that the actual brightness (17) at this instant is less than the target brightness and the load current (51) is switched off.

10. Method according to Claims 1 to 9, **characterized in that** the ascertained trigger signals (11.1-11.5) are continually analysed for their prevalence during the test interval (t_{T}), and if a prescribable threshold prevalence is exceeded then the load current (51) is switched on, in particular before the test interval (t_{T}) actually elapses, as a function of user-defined and/or prescribed system parameters and/or measured environmental parameters, provided that it is switched off.

11. Presence detector for controlling an electrical appliance, particularly a light source (18), on the basis of movements by people in a sensing range, having a detection unit (25) for detecting movement signals (A) produced by the movement of a person, and a processing unit (35) which can condition the movement signals (A) and convert them into trigger signals (B), wherein a timer (30) for providing a time signal and a memory unit (45) for storing system parameters, such as target brightness and/or minimum brightness, are present, and a programmable control unit (40), which takes the trigger signals (B), the time signal, the system parameters and, if necessary, environmental parameters recorded by additional sensors as a basis for providing a control signal for a switching unit (50) for switching a load current (51), **characterized in that** the control unit (40) is designed and programmed to carry out the method according to one of Claims 1 to 10.

## Revendications

1. Procédé de commande d'une application électrique, notamment d'une source lumineuse (18), avec un détecteur de présence (20), comportant les étapes de
a) détermination de signaux de déclenchement (11.1-11.5) pour la commande d'un courant de charge (51) par conditionnement et conversion des signaux de mouvement (A) détectés dans le détecteur de présence suite à une présence dans le domaine d'enregistrement du détecteur de présence (20) ;
b) branchement d'un courant de charge (51) en fonction de paramètres du système définis par l'utilisateur et/ou prédéfinis et/ou de paramètres d'environnement mesurés fondés sur un signal de déclenchement (11.1) déterminé en premier après une période d'absence ;
c) fixation d'une valeur courante de départ (tₛ) d'un temporisateur (30) pour un temps de temporisation (13) pour chaque signal de déclenchement déterminé (11.1-11.5), l'absence de signaux de déclenchement suivants entrainant la coupure du courant de charge (51) après expiration du temps de temporisation (13), dans la mesure où il est branché ;
**caractérisé par** les étapes de
d) détermination d'une durée de présence (t_{A}) admise, fondée sur les signaux de déclenchement (11.1-11.5) déterminés pendant un intervalle de test (t_{T}) déclenché par le signal de déclenchement (11.1) déterminé en premier, après expiration de l'intervalle de test (t_{T}), l'intervalle de test (t_{T}) étant plus court que la durée (t_{N}) du temps de temporisation (13) ;
e) comparaison de la durée de présence (t_{A}) admise déterminée avec une durée de présence (t_{A}^{max}) maximale pouvant être prédéfinie ;
f) coupure du courant de charge (51) après expiration de l'intervalle de test (t_{T}) dans la mesure où il est branché et dans la mesure où la durée de présence (t_{A}) admise est inférieure à la durée de présence (t_{A}^{max}) maximale.

2. Procédé selon la revendication 1, **caractérisé en ce que** pour la définition de la durée de présence (t_{A}) admise, on détermine un intervalle de temps (t_{X}) depuis un signal de déclenchement (11.3, 11.5) déterminé en dernier et que pour la comparaison de la durée de présence (t_{A}) admise avec la durée de présence (t_{A}^{max}) maximale, on compare l'intervalle de temps (t_{X}) déterminé avec la différence entre l'intervalle de test (t_{T}) et la durée de présence (t_{A}^{max}) maximale.

3. Procédé selon la revendication 2, **caractérisé en ce que** pour la définition de l'intervalle de temps (t_{X}) depuis le signal de déclenchement (11.3, 11.5) déterminé en dernier, on lit l'état courant du temporisateur (30) et on effectue la différence entre la lecture de l'état courant du temporisateur (30) et la valeur courante de départ (t_{S}) du temps de temporisation (13).

4. Procédé selon une des revendications 1 à 3, **caractérisé en ce que** l'intervalle de test (t_{T}) s'élève à 120 secondes et la durée de présence (t_{A}^{max}) maximale par exemple à 30 secondes.

5. Procédé selon une des revendications 1 à 4, **caractérisé en ce que** les paramètres d'environnement comportent une clarté réelle (17) indiquant une clarté mesurée courante dans le domaine d'enregistrement, et que les paramètres du système comportent une clarté de consigne correspondant à une clarté souhaitée pouvant être prédéfinie.

6. Procédé selon la revendication 5, **caractérisé en ce que** le courant de charge (51) à l'instant du signal de déclenchement (11.1) déterminé en premier, n'est branché que lorsque la clarté réelle (17) est inférieure à la clarté de consigne.

7. Procédé selon la revendication 5, **caractérisé en ce que** les paramètres du système comportent une clarté minimale inférieure à la clarté de consigne, alors qu'à l'instant du signal de déclenchement (11.1) déterminé en premier, la clarté réelle (17) est comparée à la clarté minimale et le courant de charge (51) n'est branché que lorsque la clarté réelle (17) est inférieure à la clarté minimale.

8. Procédé selon la revendication 7, **caractérisé en ce que** la clarté minimale se révèle n'être qu'une fraction de la clarté de consigne définie par l'utilisateur, la clarté minimale valant de préférence 80% de la clarté de consigne.

9. Procédé selon une des revendications 6 à 8, **caractérisé en ce qu'**au cas où la durée de présence (t_{A}) admise est supérieure à la durée de présence (t_{A}^{max}) maximale, le courant de charge (51) est branché après expiration de l'intervalle de test (t_{T}) dans la mesure où à cet instant, la clarté réelle (17) est inférieure à la clarté de consigne et que le courant de charge (51) est coupé.

10. Procédé selon les revendications 1 à 9, **caractérisé en ce que** pendant un intervalle de test (t_{T}), les signaux de déclenchement (11.1-11.5) déterminés sont analysés en permanence en ce qui concerne leur fréquence et lors du dépassement d'une fréquence de seuil pouvant être prédéfinie, le courant de charge (51) est branché dans le mesure où il est coupé, notamment dès avant expiration de l'intervalle de test (t_{T}) en fonction de paramètres du système définis par l'utilisateur et/ou prédéfinis et/ou de paramètres d'environnement mesurés.

11. Détecteur de présence pour la commande d'une application électrique, notamment d'une source lumineuse (18), fondé sur des mouvements de personnes dans un domaine d'enregistrement, avec une unité de détection (25) pour détecter des signaux de mouvement (A), et avec une unité de traitement (35) qui élabore les signaux de mouvement (A) et qui les convertit en signaux de déclenchement (B), alors qu'il existe un temporisateur (30) pour la mise à disposition d'un signal d'horloge et une unité de stockage (45) pour mémoriser des paramètres de système comme la clarté de consigne et/ou la clarté minimale, et une unité de commande programmable (40) qui met à disposition un signal de commande pour une unité de commutation (50) pour commuter un courant de charge (51) en fonction des signaux de déclenchement (B), du signal d'horloge, des paramètres du systèmes et éventuellement de paramètres d'environnement enregistrés par des capteurs supplémentaires, **caractérisé en ce que** l'unité de commande (40) est conçue et programmée pour l'exécution du procédé selon une des revendications 1 à 10.
